# EUROPÄISCHE PATENTANMELDUNG

(11) **EP 4 613 425 A1**
(43) Veröffentlichungstag der Anmeldung: **10.09.2025**
(21) Anmeldenummer: 24162351.1
(22) Anmeldetag: 08.03.2024
(51) Int. Cl.: B23Q 11/00, B23C 9/00

(54) **FRÄSSPINDEL FÜR EINEN FRÄSKOPF UND FRÄSKOPF, WERKZEUGMASCHINE UND SYSTEM**

(71) Anmelder: Geiss AG, 96145 Sesslach (DE)
(72) Erfinder: Gsänger, Andreas, 96145 Seßlach (DE)
(74) Vertreter: Isarpatent

(57) **Zusammenfassung**

Die vorliegende Erfindung betrifft eine Frässpindel (100) für einen Fräskopf (10). Die Frässpindel (100) weist eine Werkzeugaufnahme (110) für ein Fräswerkzeug (112), und eine Absaugdüse (120) auf, die mit einer Absaugung koppelbar oder gekoppelt und dazu eingerichtet ist, beim Fräsen entstehende Späne zumindest teilweise abzusaugen. Die Werkzeugaufnahme (110) und die Absaugdüse (120) sind zueinander koaxial angeordnet und gemeinsam mit der Frässpindel (100) wahlweise koppelbar oder von dieser entkoppelbar. Zudem betrifft die Erfindung einen Fräskopf, eine Werkzeugmaschine und ein System.

## Beschreibung

### TECHNISCHES GEBIET DER ERFINDUNG

Die vorliegende Erfindung betrifft eine Frässpindel für einen Fräskopf. Zudem betrifft die Erfindung eine Fräskopf mit einer solchen Frässpindel. Des Weiteren betrifft die Erfindung eine Werkzeugmaschine, insbesondere Fräsmaschine, mit einer solchen Frässpindel und/oder mit einem solchen Fräskopf. Zudem betrifft die Erfindung ein System mit einer solchen Frässpindel und/oder mit einem solchen Fräskopf und einer Werkzeughaltevorrichtung.

### HINTERGRUND DER ERFINDUNG

Bei der Fräsbearbeitung kann es erwünscht sein, dass bereits bei der Bearbeitung dabei entstehende Frässpäne und/oder Staub abgesaugt werden. Dies kann insbesondere dann erwünscht sein, wenn die Fräsbearbeitung derart automatisiert erfolgen soll, dass die Werkstücke automatisch gewechselt werden sollen. Zur Implementierung einer solchen Absaugung wäre es denkbar, Absaugdüsen fest an einer Frässpindel bzw. an einem Fräskopf zu montieren, um darüber direkt am Fräswerkzeug absaugen zu können. Diese Anordnung von Absaugdüsen kann jedoch einen automatischen Wechsel der Fräswerkzeuge verhindern. Des Weiteren wäre es zur Implementierung einer solchen Absaugung denkbar, Absaugbürsten rund um die Frässpindel herum, oder gar um den gesamten Fräskopf herum, anzuordnen, die zum Werkzeugwechsel dann jedoch, z.B. pneumatisch betätigt, eingezogen bzw. zurückgezogen werden müssen. Wünschenswert wäre dabei, dass diese Absaugbürsten dabei nicht so groß ausgeführt und nicht weit vom Fräswerkzeug entfernt sind, dass ausreichende Wirkung der Absaugung möglich ist. Zudem wäre es zur Implementierung einer solchen Absaugung denkbar, Absaugdüsen, z.B. in Form eines Schnüffelstücks, an dem Werkzeug vorzusehen, die vor einem Werkzeugwechsel abgelegt werden können, um einen zumindest teilweise automatisierten Werkzeugwechsel zu ermöglichen. Wünschenswert wäre dabei, dass sich durch das vorherige Ablegen der Absaugdüsen und das spätere Wiederaufnehmen der Absaugdüsen nach dem Werkzeugwechseln, die Werkzeugwechselzeit nicht erhöht.

### ZUSAMMENFASSUNG DER ERFINDUNG

Eine Aufgabe der Erfindung ist es daher, mit konstruktiv möglichst einfachen Mitteln ein möglichst effizientes Absaugen von Spänen und/oder Staub während einer Fräsbearbeitung zu bewerkstelligen, wobei ein automatischer Werkzeugwechsel zumindest begünstigt sein soll.

Diese Aufgabe wird durch die Gegenstände der unabhängigen Ansprüche gelöst. Beispielhafte Ausführungsformen ergeben sich aus den abhängigen Ansprüchen und der nachfolgenden Beschreibung.

Gemäß einem ersten Aspekt wird eine Frässpindel für einen Fräskopf vorgeschlagen. Die Frässpindel weist eine Werkzeugaufnahme für ein Fräswerkzeug auf. Zudem weist die Frässpindel wenigstens eine Absaugdüse auf, die mit einer Absaugung koppelbar oder gekoppelt und dazu eingerichtet ist, beim Fräsen entstehende Späne und/oder Staub zumindest teilweise abzusaugen. Die Werkzeugaufnahme und die Absaugdüse sind zueinander koaxial angeordnet. Zudem sind die Werkzeugaufnahme und die Absaugdüse gemeinsam mit der Frässpindel wahlweise koppelbar oder von dieser entkoppelbar.

Durch diese Konfiguration der Frässpindel ist es möglich, die wenigstens eine Absaugdüse gemeinsam mit der Werkzeugaufnahme, bzw. gemeinsam mit dem darin aufgenommenen Fräswerkzeug, abzulegen und bei Bedarf wieder aufzunehmen. Durch das gemeinsame, d.h. auch zumindest im Wesentlichen gleichzeitiges, Ablegen und Aufnehmen von sowohl der Absaugdüse als auch der Werkzeugaufnahme wird eine Werkzeugwechselzeit zumindest nicht verlängert, ggf. lässt sich die Werkzeugwechselzeit dadurch minimieren. Beispielsweise hat sich gezeigt, dass sich durch das gleichzeitige Ablegen und Aufnehmen die zum Werkzeugwechsel benötigte Zeit von ca. 30 s auf ca. 12 s reduzieren lässt, wobei dies nur exemplarische Angaben zur besseren Veranschaulichung sind. Zudem können die Absaugdüse und die Werkzeugaufnahme an einem einzigen Ort abgelegt, dort aufbewahrt und von dort wiederaufgenommen werden. Die vorgeschlagene Frässpindel erlaubt zudem eine bearbeitungsnahe und/oder werkzeugnahe Absaugung von z.B. Spänen, die während der Fräsbearbeitung entstehen, Staub, usw.

Der Fräskopf und/oder eine damit ausgestattete Werkzeugmaschine bzw. Fräsmaschine kann beispielsweise zum Fräsen von Kunststoffformteilen dienen, wobei das hierin beschriebene Prinzip auch auf andere Materialien, wie Metall, Holz, usw. übertragbar ist. Die Kunststoffformteile können zunächst mittels Thermoformen oder dergleichen ausgeformt und dann durch Fräsen weiterbearbeitet werden. Die vorgeschlagene Frässpindel ermöglicht es, dabei entstehende Späne abzusaugen und einen einfachen und/oder schnellen Werkzeugwechsel zu erlauben.

Bei der Werkzeugmaschine kann es sich beispielsweise um eine rechnergesteuerte Werkzeugmaschine (CNC) handeln. Die Werkzeugaufnahme kann beispielsweise als Hohlschaftkegel (HSK), Steilkegel (SK), oder dergleichen ausgeführt sein. Das Fräswerkzeug kann entsprechend der Werkzeugaufnahme ausgeführt sein. Das Fräswerkzeug kann in der Werkzeugaufnahme angeordnet sein und mitsamt der Absaugdüse und Werkzeugaufnahme von der Frässpindel wahlweise entkoppelt und z.B. abgelegt oder mit der Frässpindel gekoppelt und zur Fräsbearbeitung verwendet werden.

Die Absaugung kann beispielsweise einen motorgetriebenen Lüfter und einen oder mehrere Fluidkanäle aufweisen. Es sind auch Abscheider oder dergleichen möglich. Beim gemeinsamen Koppeln der Ansaugdüse und der Werkzeugaufnahme mit der übrigen Frässpindel kann die Ansaugdüse direkt mit einem Fluidkanal der Absaugung fluidisch gekoppelt und/oder verbunden werden.

In einer Weiterbildung können wenigstens die Werkzeugaufnahme und die Absaugdüse eine gemeinsame Baueinheit ausbilden. Die gemeinsame Baueinheit kann als komplette Baueinheit wahlweise mit der Frässpindel koppelbar oder von dieser entkoppelbar sein. Die Baueinheit kann beispielsweise so ausgeführt sein, dass die Werkzeugaufnahme und die Absaugdüse fest miteinander gekoppelt, einstückig ausgebildet, oder dergleichen sind. Die Baueinheit kann einen Koppelabschnitt aufweisen, der dazu eingerichtet ist, mit einem entsprechenden Gegenkoppelabschnitt der übrigen Frässpindel wahlweise gekoppelt oder davon entkopppelt zu werden. Die Kopplung der Baueinheit mit der übrigen Frässpindel und/oder die Entkopplung davon kann beispielsweise kraft- und/oder formschlüssig erfolgen. Dies kann aktuatorbetätigt und/oder gesteuert erfolgen. Beispielsweise kann die Kopplung der Baueinheit mit der übrigen Frässpindel und/oder die Entkopplung davon mechanisch, z.B. durch Federkraft, elektromagnetische, pneumatische, hydraulisch oder dergleichen ausgeführt sein. Die gemeinsame Baueinheit kann in einem einzigen Schritt gekoppelt und gleichermaßen entkoppelt werden. Zudem kann die gemeinsame Baueinheit an einem einzigen Ort abgelegt, dort aufbewahrt und von dort wiederaufgenommen werden. In einigen Weiterbildungen kann die Baueinheit auch wenigstens eines von einem Absaugstutzen, einer Anzahl von Führungsstiften, einer Absaugbürste und einem Fräswerkzeug aufweisen.

Gemäß einer Weiterbildung kann die Baueinheit eine Anzahl von Führungsstiften aufweisen. Die Anzahl von Führungsstiften kann zum Koppeln mit der Frässpindel in diese einführbar und dort wahlweise verriegelbar oder entriegelbar sein. Die Anzahl von Führungsstiften kann parallel zu einer Achse, auf der die Werkzeugaufnahme und die Absaugdüse zueinander koaxial angeordnet sind, einführbar sein. Die Anzahl von Führungsstiften kann eins, zwei, drei, vier oder mehr betragen. Beispielsweise können wenigstens zwei Führungsstifte vorgesehen sein, die parallel zu der Achse über die Baueinheit hervorstehen können. Die Anzahl von Führungsstiften können, bezogen auf die gemeinsame Achse der Werkzeugaufnahme und der Absaugdüse, exzentrisch angeordnet sein. Wenigstens einer aus der Anzahl von Führungsstiften kann zum wahlweisen Koppeln und/oder Entkoppeln mit bzw. von der übrigen Frässpindel eingerichtet sein.

In einer Weiterbildung kann die Baueinheit an einer Außenseite eine der Werkzeugaufnahme zugeordnete, erste Profilierung und eine der Absaugdüse zugeordnete, zweite Profilierung zum Ansetzen eines Handhabungswerkzeugs aufweisen. Die erste Profilierung und die zweite Profilierung können entlang einer Achse zueinander versetzt angeordnet sein, auf der die Werkzeugaufnahme und die Absaugdüse zueinander koaxial angeordnet sind. Die erste Profilierung und die zweite Profilierung können durch jede Art von Oberflächengestaltung ausgeführt sein, die es erlaubt, ein Handhabungswerkzeug daran anzusetzen. Beispielswiese kann dies durch eine Rille, z.B. Greiferrille, Kerbe, Nut, Vertiefung, Nase, oder dergleichen ausgeführt sein. Das Handhabungswerkzeug kann jedes aus der Automatisierungstechnik bekannte Werkzeug sein, das zum Halten und/oder Manipulieren der Baueinheit eingerichtet ist. Beispielsweise kann das Handhabungswerkzeug ein Greifer oder dergleichen sein. Beispielsweise kann ein Absaugstutzen der Frässpindel und/oder die Werkzeugaufnahme an einer jeweiligen Außenseite eine Greiferrille für einen zumindest teilweise automatisierten Wechsel der Absaugdüse und/oder der Werkzeugaufnahme aufweisen. Die Greiferrillen des Absaugstutzens und der Werkzeugaufnahme können entlang ihrer gemeinsamen Achse zueinander versetzt angeordnet sein, wodurch der Absaugstutzen und die Werkzeugaufnahme gleichzeitig gegriffen werden können.

Gemäß einer Weiterbildung kann die Frässpindel ferner einen Absaugstutzen aufweisen. Der Absaugstutzen kann einerseits mit der Absaugdüse fluidisch gekoppelt und andererseits mit der Absaugung wahlweise fluidisch koppelbar sein. Der Absaugstutzen kann relativ zu einer ersten Achse abgewinkelt sein, auf der die Werkzeugaufnahme und die Absaugdüse zueinander koaxial angeordnet sind. Insbesondere kann ein Absaugkanal, mit dem der Absaugstutzen wahlweise fluidisch koppelbar sein zumindest abschnittweise parallel zu der Achse sein. Der Absaugstutzen kann dazu eingerichtet sein, beim Koppeln mit der Frässpindel direkt eine fluidische Verbindung zu der Absaugung herzustellen.

In einer Weiterbildung kann der Absaugstutzen eine der Absaugdüse zugewandte erste Seite zum fluidischen Koppeln mit der Absaugdüse und eine der Absaugdüse abgewandte, zweite Seite zum fluidischen Koppeln mit der Absaugung aufweisen. Die zweite Seite kann auf einer zweiten Achse angeordnet sein, die zumindest im Wesentlichen parallel zu der ersten Achse ist.

Gemäß einer Weiterbildung kann die Frässpindel ferner ein Kupplungsstück aufweisen, das an der Frässpindel befestigt und dazu eingerichtet ist, den Absaugstutzen damit fluidisch zu koppeln und den Absaugstutzen zu spannen. Das Kupplungsstück

In einer Weiterbildung kann die Frässpindel ferner eine Absaugbürste aufweisen. Die Absaugbürste kann an einer der Werkzeugaufnahme abgewandten Seite der Absaugdüse angeordnet sein. Beispielsweise kann die Absaugbürste konzentrisch zu der Absaugdüse und/oder der Werkzeugaufnahme angeordnet sein.

Gemäß einer Weiterbildung können die Werkzeugannahme und die Absaugdüse derart koaxial auf einer Achse angeordnet sein, dass das in der Werkzeugaufnahme anordbare oder angeordnete Fräswerkzeug die Absaugdüse entlang der Achse, insbesondere konzentrisch, durchdringt.

In einer Weiterbildung kann die Frässpindel dazu eingerichtet sein, angebracht an dem Fräskopf, relativ zu diesem um eine Achse schwenkbar zu sein, die quer ist zu einer Achse, auf der die Werkzeugaufnahme und die Absaugdüse zueinander koaxial angeordnet sind. Die gemeinsame Achse kann eine Achse der Frässpindel und/oder des Fräskopfes sein, um die diese und/oder dieser zur Fräsbearbeitung dreht.

Gemäß einem zweiten Aspekt wird ein Fräskopf vorgeschlagen. Der Fräskopf weist eine Frässpindel gemäß dem ersten Aspekt auf. Beispielsweise kann der Fräskopf als Gabelfräskopf, Orthogonalfräskopf, oder dergleichen ausgeführt sein, wobei das hierin beschriebene Prinzip auch auf andere Ausführungen des Fräskopfes übertragbar sein kann.

Hinsichtlich möglicher Weiterbildungen des Fräskopfes wird auf die Beschreibung der Frässpindel verwiesen.

In einer Weiterbildung kann der Fräskopf als 5-Achs-Fräskopf ausgebildet sein.

Gemäß einem dritten Aspekt wird eine Werkzeugmaschine, insbesondere Fräsmaschine vorgeschlagen. Die Werkzeugmaschine weist eine Frässpindel gemäß dem ersten Aspekt und/oder einen Fräskopf gemäß dem zweiten Aspekt auf.

Hinsichtlich möglicher Weiterbildungen wird auf die Beschreibung der Frässpindel und/oder des Fräskopfes verwiesen.

Gemäß einem vierten Aspekt wird ein System vorgeschlagen. Das System weist eine Frässpindel gemäß dem ersten Aspekt, einen Fräskopf gemäß dem zweiten Aspekt und/oder eine Werkzeugmaschine gemäß dem dritten Aspekt auf. Zudem weist das System eine Werkzeughaltevorrichtung vor. Die Werkzeughaltevorrichtung weist eine der Werkzeugaufnahme der Frässpindel zugeordnete, erste Haltevorrichtung und eine der Absaugdüse der Frässpindel zugeordnete, zweite Haltevorrichtung auf. Die erste Haltevorrichtung und die zweite Haltevorrichtung sind zueinander koaxial angeordnet.

Die Werkzeughaltevorrichtung erlaubt es, die Werkzeugaufnahme, ggf. mitsamt dem darin angeordneten Fräswerkzeug, gemeinsam mit der Absaugdüse aufzunehmen und/oder zu halten. Dabei kann eine Kollision zwischen der Frässpindel und/oder dem Fräskopf und der Werkzeughaltevorrichtung ausgeschlossen sein. Die Werkzeughaltevorrichtung kann auch als Werkwechsler ausgeführt und/oder bezeichnet werden. Beispielsweise kann die

Werkzeughaltevorrichtung als Kettenwechsler, Trommelwechsler, als einzeln angeordnete

In einer Weiterbildung kann die Werkzeughaltevorrichtung ein Gehäuse mit wenigstens einem Gehäusedurchbruch zum gemeinsamen Einschleusen und Ausschleusen der Absaugdüse und der Werkzeugaufnahme aufweisen. Der wenigstens eine Gehäusedurchbruch kann mittels einer Verschließvorrichtung wahlweise verschließbar oder zu öffnen sein. Durch das Gehäuse kann die Werkzeughaltevorrichtung eine geschlossene Box ausbilden, so dass keine Späne, kein Staub, usw. dort eindringen und/oder von dort nach außen dringen können.

Die oben beschriebenen Aspekte, Ausgestaltungen, Varianten und Beispiele können miteinander kombiniert werden, ohne dass dies explizit beschrieben ist. Jede der beschriebenen Ausgestaltungsvarianten und jedes Beispiel sind somit optional zu jedem der Aspekte, Ausgestaltungen, Varianten und Beispielen oder bereits Kombinationen davon zu sehen. Die vorliegende Offenbarung ist somit nicht auf die einzelnen Ausgestaltungen und Ausgestaltungsvarianten in der beschriebenen Reihenfolge oder einer bestimmten Kombination der Aspekte und Ausgestaltungsvarianten beschränkt.

### KURZBESCHREIBUNG DER ZEICHNUNGEN

Im Folgenden wird die Erfindung unter Bezugnahme auf die Figuren der Zeichnungen erläutert. Von den Figuren zeigen:
- Fig. 1: in einer perspektivischen Ansicht eine Frässpindel für einen Fräskopf gemäß einer Ausführungsform, die beispielhaft in einer Werkzeugmaschine verwendet werden.
- Fig. 2: in einer perspektivischen Ansicht eine Baueinheit mit einer Werkzeugaufnahme und einer Absaugdüse gemäß einer Ausführungsform.
- Fig. 3: in einer teilweise geschnittenen Seitenansicht einen Fräskopf mit einer Frässpindel gemäß einer Ausführungsform.
- Fig. 4: in einer Vorderansicht eine exemplarische Werkzeughaltevorrichtung gemäß einer Ausführungsform.
- Fig. 5: in einer Seitenansicht eine Werkzeughaltevorrichtung und einen Fräskopf mit Frässpindel gemäß einer Ausführungsform.

In den Figuren bezeichnen dieselben Bezugszeichen gleiche oder funktionsgleiche Komponenten, soweit nichts Gegenteiliges angegeben ist.

### AUSFÜHRLICHE BESCHREIBUNG VON AUSFÜHRUNGSBEISPIELEN DER ERFINDUNG

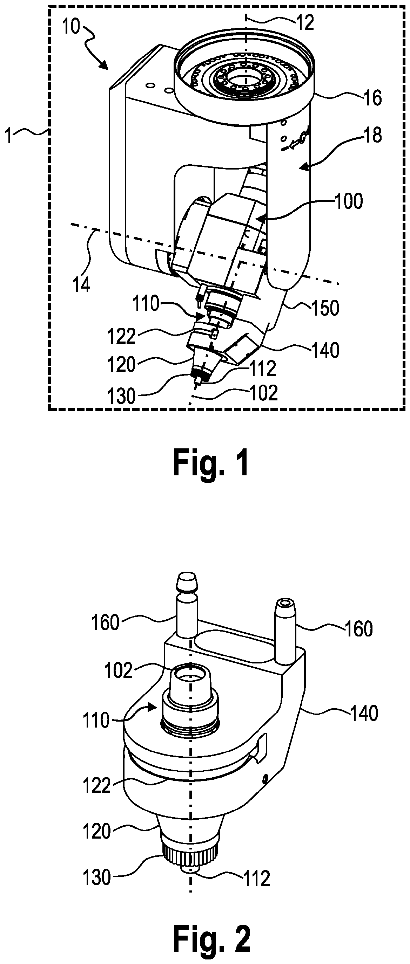

Fig. 1 zeigt grobschematisch eine Werkzeugmaschine 1, bei der es sich insbesondere um eine Fräsmaschine handelt. Diese weist einen Fräskopf 10 mit einer Frässpindel 100 auf.

Der Fräskopf 10 kann mehrachsig ausgeführt sein, beispielsweise auch als 5-Achs-Fräskopf. Gemäß Fig. 1 kann der Fräskopf 10 und/oder die Frässpindel um eine Achse 12 drehbar sein. Die Frässpindel 100 kann um eine Achse 14 relativ zu dem Fräskopf 10 schwenkbar sein. Der Fräskopf 10 weist eine Absaugung auf oder ist mit einer Absaugung koppelbar oder gekoppelt, wobei in Fig. 1 nur ein fräskopfseitiger Teil der Absaugung gezeigt ist. Der fräskopfseitige Teil der Absaugung kann einen oder mehrere Fluidkanäle aufweisen. Gemäß Fig. 1 kann fräskopfseitig ein Ringkanal 16 vorgesehen sein, der sich um die Achse 12 herum erstreckt. Der Ringkanal 16 kann mit einem oder mehreren weiteren Fluidkanälen fluidisch gekoppelt und/oder verbunden sein, beispielsweise mit einem Fluidkanal 18. Beispielsweise kann die Absaugung dazu eingerichtet sein, mittels eines Lüfters, einer Pumpe, oder dergleichen einen Luftstrom zu erzeugen, der das Absaugen von Spänen, Staub, usw. erlaubt.

Die Frässpindel 100 weist eine Achse 102 auf, die, wenn die Frässpindel 100 nicht um die Achse 14 verschwenkt ist, mit der Achse 12 zusammenfallen kann, wie dies aus Fig. 1 hervorgeht. Die Achse 102 und die Achse 14 können quer, z.B. auch senkrecht, zueinander ausgerichtet sein.

Die Frässpindel 100 weist eine Werkzeugaufnahme 110 für ein Fräswerkzeug 112 auf, das in Fig. 1 in der Werkzeugaufnahme 110 angeordnet ist. Zudem weist die Frässpindel 100 eine Absaugdüse 120 auf, die mit der oben erwähnten Absaugung koppelbar oder gekoppelt und dazu eingerichtet ist, beim Fräsen entstehende Späne zumindest teilweise abzusaugen. Die Absaugung durch die Absaugdüse 120 kann also in unmittelbarer Nähe zu dem Fräswerkzeug 112 erfolgen. Die Werkzeugaufnahme 110 und die Absaugdüse 120 sind zueinander koaxial angeordnet und gemeinsam, d.h. auch gleichzeitig, mit der Frässpindel 100 wahlweise koppelbar oder von dieser entkoppelbar. Gemäß Fig. 1 sind die Werkzeugaufnahme 110 und die Absaugdüse 120 gemeinsam auf bzw. entlang der Achse 102 angeordnet. In anderen Worten können die Werkzeugaufnahme 110 und die Absaugdüse 120 eine gemeinsame Baueinheit ausbilden, die als komplette Baueinheit wahlweise mit der Frässpindel 100, bzw. mit deren übrigen Komponenten, wahlweise koppelbar oder von dieser entkoppelbar sein. In zumindest einigen Ausführungsformen kann die Frässpindel 100 eine Absaugbürste 130 aufweisen, die an einer der Werkzeugaufnahme 110 abgewandten Seite der Absaugdüse 120 angeordnet sein kann. Die Absaugbürste 130 kann konzentrisch zu dem Fräswerkzeug 112 angeordnet sein.

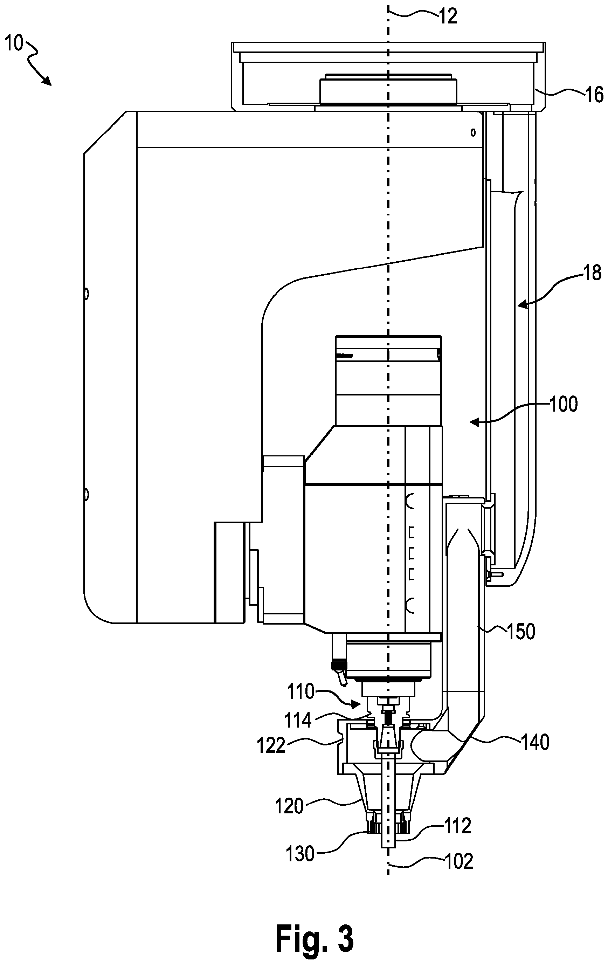

In zumindest einigen Ausführungsformen kann die Frässpindel ferner einen Absaugstutzen 140 aufweisen. Der Absaugstutzen 140 kann einerseits mit der Absaugdüse 120 fluidisch gekoppelt sein und andererseits mit der oben erwähnten Absaugung wahlweise fluidisch koppelbar und/oder von dieser entkoppelbar sein. Der Absaugstutzen 140 abgewinkelt sein. Beispielsweise kann der Absaugstutzen 140 relativ zu einer ersten Achse, gemäß Fig. 1 der Achse 102, abgewinkelt sein, auf der die Werkzeugaufnahme 110 und die Absaugdüse 120 zueinander koaxial angeordnet sind. Beispielsweise kann der Absaugstutzen 140 eine der Absaugdüse 120 zugewandte erste Seite zum fluidischen Koppeln mit der Absaugdüse 120 und eine der Absaugdüse 120 abgewandte, zweite Seite zum fluidischen Koppeln mit der Absaugung aufweisen, wobei die zweite Seite auf einer Achse angeordnet sein kann, die zumindest im Wesentlichen parallel zu der Achse 102 ist. Der Absaugstutzen 140 kann dazu eingerichtet sein, von der Werkzeugaufnahme 110 und/oder dem Fräswerkzeug 112 entlang der Achse 102 durchdrungen zu werden. Der Absaugstutzen 140 kann einen Teil der oben erwähnten gemeinsamen Baueinheit mit der Werkzeugaufnahme 110 und der Absaugdüse 120 ausbilden. In zumindest einigen Ausführungsformen kann der Absaugstutzen 140 und/oder die Werkzeugaufnahme 110 an einer jeweiligen Außenseite eine Profilierung 114, 122, z.B. Greiferrille, (siehe z.B. Fig. 3 für die Profilierung 114) für einen zumindest teilweise automatisierten Wechsel der Absaugdüse 120 und/oder der Werkzeugaufnahme 110 aufweisen, wobei in Fig. 1 lediglich die Profilierung 122 der Absaugdüse 120 und/oder des Absaugstutzens 140 erkennbar ist.

Zum wahlweisen fluidischen Koppeln und/oder Entkoppeln des Absaugstutzens 140 mit der Frässpindel 100 kann die Frässpindel 100 ein Kupplungsstück 150 aufweisen. Das Kupplungsstück 150 kann an der Frässpindel befestigt und dazu eingerichtet sein, den Absaugstutzen 140 damit fluidisch zu koppeln. Ggf. kann das Kupplungsstück 150 dazu eingerichtet sein, den Absaugstutzen 140 zu spannen.

Fig. 2 zeigt in einer perspektivischen Ansicht eine exemplarische Ausgestaltung der oben erwähnten Baueinheit mit wenigstens der Werkzeugaufnahme 110 und der Absaugdüse 120. Die Baueinheit kann zum Werkzeugwechsel als komplette Baueinheit wahlweise mit der übrigen Frässpindel 100 gekoppelt oder von dieser entkoppelt werden kann.

Die Baueinheit weist eine Anzahl von Führungsstiften 160 auf. Die Anzahl von Führungsstiften 160 ist dazu eingerichtet, zum Koppeln mit der übrigen Frässpindel 100 in diese parallel zu einer Achse, auf der die Werkzeugaufnahme 110 und die Absaugdüse 120 zueinander koaxial angeordnet sind, d.h. einführbar und dort wahlweise verriegelbar oder entriegelbar sind. Beispielsweise kann, wie in Fig. 1 exemplarisch angedeutet, wenigstens einer der Führungsstifte dazu eingerichtet sein, z.B. mittels einer kraftschlüssigen und/oder formschlüssigen Verbindung mit der übrigen Frässpindel 100 lösbar gekoppelt zu werden.

Fig. 3 zeigt in einer teilweise geschnittenen Seitenansicht den Fräskopf 10 mit der Frässpindel 100.

Anhand von Fig. 3 ist ein Fluidpfad der Absaugung nachvollziehbar, der sich hier exemplarisch von der Absaugdüse 120, ggf. mit vorgeschalteter Absaugbürste 130, über den Absaugstutzen 140, das Kupplungsstück 150, den Fluidkanal 18 und den Ringkanal 16 erstreckt.

Wie oben erwähnt, kann die Baueinheit aus der Werkzeugaufnahme 110 und der Absaugdüse 120 an einer Außenseite die der Werkzeugaufnahme 100 zugeordnete, erste Profilierung14 und die der Absaugdüse 120 zugeordnete, zweite Profilierung 122 zum Ansetzen eines Handhabungswerkzeugs aufweisen. Die erste Profilierung 114 und die zweite Profilierung 122 sind entlang einer Achse zueinander versetzt angeordnet sind, auf der die Werkzeugaufnahme 110 und die Absaugdüse 120 zueinander koaxial angeordnet sind, d.h. der Achse 102.

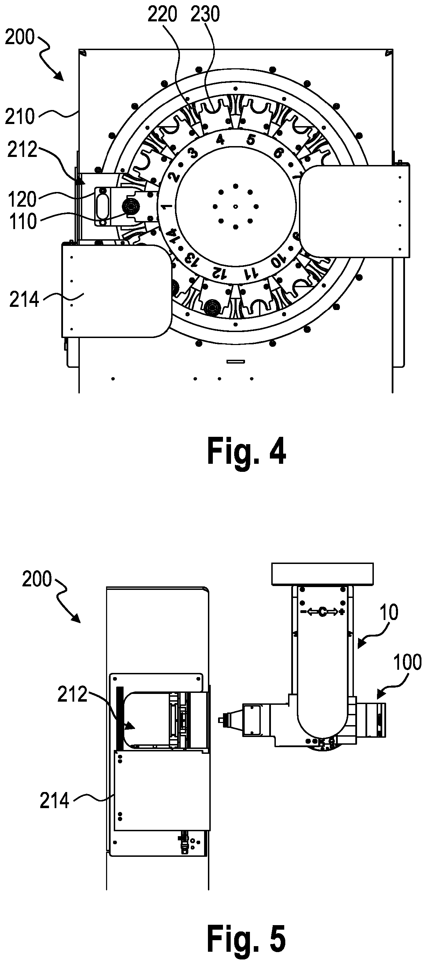

Fig. 4 zeigt in einer Vorderansicht eine exemplarische Werkzeughaltevorrichtung 200. Die Werkzeughaltevorrichtung 200 dient dazu bzw. ist dazu eingerichtet, die Werkzeugaufnahme 110 und die Absaugdüse 120 gemeinsam, auch gleichzeitig, aufzunehmen und/oder zu halten. D.h., dass die Werkzeughaltevorrichtung 200 dazu eingerichtet sein, kann die oben erwähnte Baueinheit aus der Werkzeugaufnahme 110 und der Absaugdüse 120 komplett aufzunehmen und/oder zu halten.

Die Werkzeughaltevorrichtung 200 weist ein Gehäuse 210 auf. Das Gehäuse 210 weist wenigstens einen Gehäusedurchbruch 212 zum gemeinsamen Einschleusen und Ausschleusen der Absaugdüse 120 und der Werkzeugaufnahme 110 auf. Der wenigstens eine Gehäusedurchbruch 212 wahlweise mittels einer Verschließvorrichtung 214 wahlweise verschließbar oder zu öffnen ist. Im verschlossenen Zustand kann das Gehäuse eine geschlossene Box bilden.

Zudem weist die Werkzeughaltevorrichtung 200 eine der Werkzeugaufnahme 110 der Frässpindel 100 zugeordnete, erste Haltevorrichtung 220 und eine der Absaugdüse 120 der Frässpindel 100 zugeordnete, zweite Haltevorrichtung 230 auf. Die erste Haltevorrichtung 220 und die zweite Haltevorrichtung 230 sind zueinander koaxial angeordnet.

Anhand von Fig. 5, die die Werkzeughaltevorrichtung 200 und den Fräskopf 10 mit der Frässpindel 100 in einer Seitenansicht zeigt, soll nun ein zumindest teilweise automatisierter Werkzeugwechsel erläutert werden, bei dem die Absaugdüse 120 und die Werkzeugaufnahme 110, ggf. mitsamt Fräswerkzeug 112, gemeinsam und/oder gleichzeitig abgelegt und/oder aufgenommen werden können.

Wie oben erläutert, sind erste Haltevorrichtung 220 und die zweite Haltevorrichtung 230 der Werkzeughaltevorrichtung zueinander koaxial angeordnet. Gleichermaßen sind, wie oben erläutert, die Werkzeugaufnahme 110 und die Absaugdüse 120 zueinander koaxial angeordnet.

Wird nun die Frässpindel 100, wie in Fig 5 angedeutet, in die Werkzeughaltevorrichtung 200, z.B. durch den Gehäusedurchbruch 212, eingeführt, können die erste Haltvorrichtung 220 die Werkzeugaufnahme 110 und die zweite Haltevorrichtung 230 die Absaugdüse 110 aufnehmen, halten, oder dergleichen. Damit lässt sich das Fräswerkzeug 212 mitsamt Absaugdüse 120 ablegen. Gleichermaßen kann ein anderes Werkzeug aus der Werkzeughaltevorrichtung 200 mitsamt Absaugdüse 120 aufgenommen werden. Zur Handhabung der Werkzeugaufnahme 110 und der Absaugdüse 120 kann beispielsweise ein Handhabungswerkzeug, wie etwa ein Greifer oder dergleichen, eingesetzt werden. Dieser kann beispielsweise an den Profilierungen 114, 122 angesetzt werden.

### BEZUGSZEICHENLISTE

- 1: Werkzeugmaschine
- 10: Fräskopf
- 12: Achse
- 14: Achse
- 16: Ringkanal
- 18: Fluidkanal
- 100: Frässpindel
- 102: Achse
- 104: Achse
- 110: Werkzeugaufnahme
- 112: Fräswerkzeug
- 114: Profilierung
- 120: Absaugdüse
- 122: Profilierung
- 130: Absaugbürste
- 140: Absaugstutzen
- 150: Kupplungsstück
- 160: Führungsstift
- 200: Werkzeughaltevorrichtung
- 210: Gehäuse
- 212: Gehäusedurchbruch
- 214: Verschließvorrichtung
- 220: Haltevorrichtung
- 230: Haltevorrichtung

## Patentansprüche

1. Frässpindel (100) für einen Fräskopf (10), aufweisend:
eine Werkzeugaufnahme (110) für ein Fräswerkzeug (112), und
eine Absaugdüse (120), die mit einer Absaugung koppelbar oder gekoppelt und dazu eingerichtet ist, beim Fräsen entstehende Späne zumindest teilweise abzusaugen,
wobei die Werkzeugaufnahme (110) und die Absaugdüse (120) zueinander koaxial angeordnet und gemeinsam mit der Frässpindel (100) wahlweise koppelbar oder von dieser entkoppelbar sind.

2. Frässpindel nach Anspruch 1, wobei wenigstens die Werkzeugaufnahme (110) und die Absaugdüse (120) eine gemeinsame Baueinheit ausbilden, die als komplette Baueinheit wahlweise mit der Frässpindel (100) koppelbar oder von dieser entkoppelbar ist.

3. Frässpindel nach Anspruch 2, wobei die Baueinheit eine Anzahl von Führungsstiften (160) aufweist, die zum Koppeln mit der Frässpindel (100) in diese parallel zu einer Achse (102), auf der die Werkzeugaufnahme (110) und die Absaugdüse (120) zueinander koaxial angeordnet sind, einführbar und dort wahlweise verriegelbar oder entriegelbar sind.

4. Frässpindel nach Anspruch 2 oder 3, wobei die Baueinheit an einer Außenseite eine der Werkzeugaufnahme (110) zugeordnete, erste Profilierung (114) und eine der Absaugdüse (120) zugeordnete, zweite Profilierung (122) zum Ansetzen eines Handhabungswerkzeugs aufweist, und die erste Profilierung (114) und die zweite Profilierung (122) entlang einer Achse (102) zueinander versetzt angeordnet sind, auf der die Werkzeugaufnahme (110) und die Absaugdüse (120) zueinander koaxial angeordnet sind.

5. Frässpindel nach einem der vorhergehenden Ansprüche, ferner aufweisend einen Absaugstutzen (140), der einerseits mit der Absaugdüse (110) fluidisch gekoppelt und andererseits mit der Absaugung wahlweise fluidisch koppelbar ist, wobei der Absaugstutzen (140) relativ zu einer ersten Achse (102) abgewinkelt ist, auf der die Werkzeugaufnahme (110) und die Absaugdüse (120) zueinander koaxial angeordnet sind.

6. Frässpindel nach Anspruch 5, wobei der Absaugstutzen (140) eine der Absaugdüse (120) zugewandte erste Seite zum fluidischen Koppeln mit der Absaugdüse (120) und eine der Absaugdüse (120) abgewandte, zweite Seite zum fluidischen Koppeln mit der Absaugung aufweist, und die zweite Seite auf einer zweiten Achse angeordnet ist, die zumindest im Wesentlichen parallel zu der ersten Achse (102) ist.

7. Frässpindel nach Anspruch 5 oder 6, ferner aufweisend ein Kupplungsstück (150), das an der Frässpindel (100) befestigt und dazu eingerichtet ist, den Absaugstutzen (120) damit fluidisch zu koppeln und den Absaugstutzen (140) zu spannen.

8. Frässpindel nach einem der vorhergehenden Ansprüche, ferner aufweisend eine Absaugbürste (130), die an einer der Werkzeugaufnahme (110) abgewandten Seite der Absaugdüse (120) angeordnet ist.

9. Frässpindel nach einem der vorhergehenden Ansprüche, wobei die Werkzeugannahme (110) und die Absaugdüse (120) derart koaxial auf einer Achse (102) angeordnet sind, dass das in der Werkzeugaufnahme (110) anordbare oder angeordnete Fräswerkzeug (112) die Absaugdüse (120) entlang der Achse (102), insbesondere konzentrisch, durchdringt.

10. Frässpindel nach einem der vorhergehenden Ansprüche, wobei die Frässpindel (100) dazu eingerichtet ist, wenn sie an dem Fräskopf angebracht ist, relativ zu diesem um eine Achse (14) schwenkbar zu sein, die quer ist zu einer Achse (102), auf der die Werkzeugaufnahme (110) und die Absaugdüse (120) zueinander koaxial angeordnet sind.

11. Fräskopf (10), mit einer Frässpindel (100) nach einem der vorhergehenden Ansprüche.

12. Fräskopf (10) nach Anspruch 11, wobei der Fräskopf als 5-Achs-Fräskopf ausgebildet ist.

13. Werkzeugmaschine (1), mit einer Frässpindel (100) nach einem der Ansprüche 1 bis 10 und/oder mit einem Fräskopf (10) nach Anspruch 11 oder 12.

14. System, aufweisend:
eine Frässpindel (100) gemäß einem der Ansprüche 1 bis 10 oder einen Fräskopf (10) gemäß Anspruch 11 oder 12, und
eine Werkzeughaltevorrichtung (200), die eine der Werkzeugaufnahme (110) der Frässpindel (100) zugeordnete, erste Haltevorrichtung (220) und eine der Absaugdüse (120) der Frässpindel (100) zugeordnete, zweite Haltevorrichtung (230) aufweist, wobei die erste Haltevorrichtung (220) und die zweite Haltevorrichtung (230) zueinander koaxial angeordnet sind.

15. System nach Anspruch 14, wobei die Werkzeughaltevorrichtung (200) ein Gehäuse (210) mit wenigstens einem Gehäusedurchbruch (212) zum gemeinsamen Einschleusen und Ausschleusen der Absaugdüse (120) und der Werkzeugaufnahme (110) aufweist, und der wenigstens eine Gehäusedurchbruch (212) wahlweise mittels einer Verschließvorrichtung (214) wahlweise verschließbar oder zu öffnen ist.
